(19) Europäisches Patentamt
European Patent Office
Office européen des brevets

(11) Veröffentlichungsnummer: **0 058 148**
**A2**

(12) # EUROPÄISCHE PATENTANMELDUNG

(21) Anmeldenummer: 82890016.7

(22) Anmeldetag: 04.02.82

(51) Int. Cl.³: C 23 G 1/36
C 01 G 49/00, C 22 B 3/00

(30) Priorität: 10.02.81 AT 601/81

(43) Veröffentlichungstag der Anmeldung: 18.08.82 Patentblatt 82/33

(84) Benannte Vertragsstaaten: BE DE FR GB IT SE

(71) Anmelder: Andritz Ruthner Industrieanlagen Aktiengesellschaft
Aichholzgasse 51-53
A-1121 Wien(AT)

(72) Erfinder: Charwath, Michael, Dr.
Wienerstrasse 1
A-2361 Laxenburg(AT)

(72) Erfinder: Maresch, Gerald, Dr.
Parkstrasse 4/22
A-2340 Mödling(AT)

(72) Erfinder: Movahedi, Rassoul, Dr.
Ortsstrasse 117
A-2331 Vösendorf(AT)

(72) Erfinder: Samhaber, Friedrich, Dr.Dipl.-Ing.
Schieferhub 5
A-4722 Peuerbach(AT)

(74) Vertreter: Köhler-Pavlik, Johann, Dipl.-Ing.
Margaretenplatz 5
A-1050 Wien(AT)

(54) **Verfahren zum Aufbereiten verbrauchter, Eisenionen enthaltender Behandlungsflüssigkeiten oder Laugungsflüssigkeiten für metallhältige Werkstoffe oder Erze durch flüssig-flüssig-Extraktion.**

(57) Verfahren zum Aufbereiten verbrauchter Eisenionen enthaltender Behandlungsflüssigkeiten oder Laugungsflüssigkeiten für metallhältige Werkstoffe oder Erze durch flüssig-flüssig-Extraktion. Die an Eisenionen gebundenen, anorganischen Säuren werden in einer ersten Verfahrensstufe mittels eines flüssigen Kationentauschers unter gleichzeitiger extraktiver Entfernung der Eisenionen in Freiheit gesetzt, anschließend in einer zweiten Verfahrensstufe selbst mittels mit ihnen Addukte bildenden, organischen Extraktionsmitteln aus der wässrigen Phase entfernt und durch Zersetzen dieser Addukte mit Wasser oder verdünnten Säuren wiedergewonnen.

./...

EP 0 058 148 A2

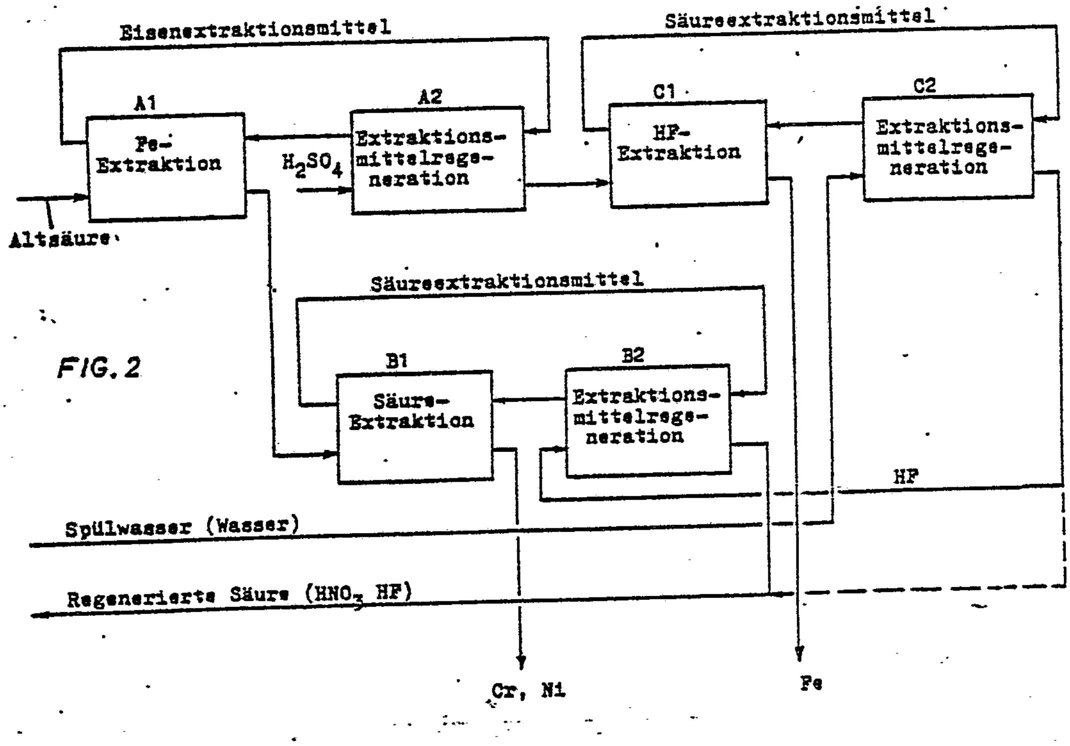
Eisenextraktionsmittel
Säureextraktionsmittel
A1
Fe-Extraktion
A2
Extraktionsmittelregeneration
$H_2SO_4$
C1
HF-Extraktion
C2
Extraktionsmittelregeneration
Altsäure
Säureextraktionsmittel
B1
Säure-Extraktion
B2
Extraktionsmittelregeneration
HF
Spülwasser (Wasser)
Regenerierte Säure ($HNO_3$ HF)
Cr, Ni
Fe

FIG. 2

Verfahren zum Aufbereiten verbrauchter, Eisenionen enthaltender Behandlungsflüssigkeiten oder Laugungsflüssigkeiten für metallhältige Werkstoffe oder Erze durch flüssig-flüssig-Extraktion

Die Erfindung betrifft ein Verfahren zum Aufbereiten verbrauchter, Eisenionen enthaltender Behandlungsflüssigkeiten oder Laugungsflüssigkeiten für metallhältige Werkstoffe oder Erze durch flüssig-flüssig-Extraktion, wobei in einer Verfahrensstufe Eisenionen und in einer anderen Verfahrensstufe anorganische Säuren extrahiert werden. Hiebei ist vor allem an verbrauchte Edelstahlbeizsäuren oder Passivierungsbäder gedacht.

Es sind bereits mehrere Verfahren zur Aufbereitung bzw. Regeneration verbrauchter wässriger Behandlungsflüssigkeiten oder Laugungsflüssigkeiten für metallische Werkstoffe oder Erze bekannt. So werden z.B. nach dem Verfahren der DE-OS 2 302 563 anorganische einwertige Säuren aus einer Metallsalze der Säuren enthaltenden, wässrigen Lösung dadurch entfernt, daß man durch Zusatz von Schwefelsäure die einwertigen

Säuren aus ihren Salzen freisetzt und sodann mit einem organischen Extraktionsmittel, welches mit diesen Säuren Addukte bildet, extrahiert. Die freien Säuren werden daraufhin durch Extraktion mit Wasser aus diesen Addukten gewonnen. Die ursprünglichen an die Säurereste der einwertigen Säuren gebundenen Metallionen (z.B. Eisen, Nickel, Chrom) fallen in Form ihrer Sulfate an und können durch Natronlauge, die auch die überschüssige Schwefelsäure neutralisiert, in die Hydroxyde überführt werden. Als Extraktionsmittel wird eine Lösung von Tributylphosphat (TBP) in Kerosin angewendet.

Dieses bekannte Verfahren hat jedoch eine Reihe schwerwiegender Nachteile. So werden dabei z.B. die Fe-Ionen nicht von den anderen Schwermetallionen getrennt, was die Wiedergewinnung von z.B. Cr. und Ni sehr erschwert und verteuert. Wird die Fällung der Hydroxyde und die Neutralisation der überschüssigen Schwefelsäure mit NaOH vorgenommen, so erwachsen daraus - wegen des relativ hohen Preises von NaOH - sehr hohe Betriebsmittelkosten. Wird dagegen die NaOH durch das wesentlich billigere $Ca(OH)_2$ ersetzt, so fallen große Mengen metallhydroxydhältige Gipsschlammes an, welcher ein nicht zu unterschätzendes Deponieproblem darstellt.

Weiters wird in der DE-OS 2 610 434 ein Verfahren beschrieben, bei welchem die verbrauchte Behandlungsflüssigkeit in einer ersten Stufe mit einem organischen Lösungsmittel (A) versetzt wird, um das enthaltene Eisen zu extrahieren und anschließend die eisenionenarme Flüssigkeit in einer zweiten Stufe mit einer Säure, vorzugsweise Salzsäure, angesäuert wird, um die Wasserstoffionenkonzentration

zu erhöhen und die Nitrat- und Fluoridionen in die entsprechenden freien Säuren (HF und $HNO_3$) überzuführen. Anteile der freien Säuren werden dann mit einem organischen Lösungsmittel (B) extrahiert, worauf in einer dritten Stufe die wässrige Phase aus der zweiten Stufe mit einem Lösungsmittel C extrahiert wird, um weitere Mineralsäuren zu extrahieren.

Die organischen Lösungsmittel A, B und C werden in den jeweiligen Stufen regeneriert. Als organische Extraktionsmedium A wird dabei vorwiegend eine Lösung eines Dialkylphosphorsäureesters wie Diäthylhexylphosphat ($D_2EHPA$) oder Dibutylphosphat in Kerosin verwendet.

Als organisches Extraktionsmedium B wird eine Lösung vorgeschlagen, die sowohl einen Phosphorsäureester wie Tributylphosphat (TBP), Trioctylphosphat (TOP), Dibutylbenzylphosphat (DBBP) als auch ein primäres, sekundäres oder tertiäres Amin bzw. eine quaternäre Ammoniumverbindung und Kerosin als Verdünnungsmittel enthält.

Als organisches Extraktionsmittel C wird eine Lösung von einem oder mehreren Phosphorsäureestern wie TBP, TOP oder TOPO in Kerosin angewendet.

Schließlich wird zur Behandlung der Abstreiflösung aus der ersten Stufe im Falle einer geringen Eisenionenkonzentration noch ein Extraktionsmittel D vorgeschlagen, welches Phosphorsäureester wie Tributylphosphat (TBP), Trioctylphosphat (TOP), Dibutylbenzylphosphat (DBBP) oder ein primäres, sekundäres, tertiäres oder quaternäres Amin enthält.

BAD ORIGINAL

Jedoch auch dieses bekannte Verfahren hat eine Reihe schwerwiegender Nachteile. Durch die vielen Verfahrensstufen ist es umständlich und im technischen Betrieb aufwendig.

Beiden dieser vorerwähnten Verfahren ist der gravierende Nachteil gemeinsam, daß eine Fremdsäure (im ersten Fall $H_2SO_4$, im zweiten Fall HCl) zugesetzt werden muß, um die zu extrahierenden Säuren aus ihren Salzen freizusetzen und eine für die Extraktion günstige Wasserstoffionenkonzentration einzustellen. Dies hat zur Folge, daß diese Fremdsäuren teilweise in das organische Extraktionsmittel gelangen und aus diesem bei der Reextraktion in die regenerierte Säure bzw. die regenerierte Behandlungsflüssigkeit eingeschleust werden können. Bei vielen Behandlungsarten von metallischen Werkstoffen und insbesondere beim Beizen von Edelstählen ist es jedoch unerwünscht, wenn Fremdsäuren und hier insbesondere HCl in das Beizbad gelangen, da sie den Beizprozeß negativ beeinflussen und die Beizqualität beeinträchtigen.

Im Falle der DE-OS 2 302 563 befinden sich also nach Zusatz von überschüssiger $H_2SO_4$ in der zu extrahierenden Lösung freie $HNO_3$, HF und $H_2SO_4$. Bei der nachfolgenden Extraktion mit einer TBP-Lösung gelangen nicht nur $HNO_3$ und HF, sondern auch $H_2SO_4$ in die organische Phase. Wenn nun auch die $HNO_3$ und HF bevorzugt extrahiert wird, so ist dennoch der Anteil der extrahierten $H_2SO_4$-Menge bemerkenswert und nicht zu vernachlässigen.
(Vgl. AAPELBLAT, J.Chem.Soc. (1), 1970, 1271 ff, E.HESFORD und G.A.X. McKAY, J.Inorg.Nucl.Chem. 1960, Vol 13, S. 156-164)

Weiters kann die Stabilität des Extraktionsmittels durch die $H_2SO_4$ gefährdet werden, wenn z.B. TBP in Kerosinlösung - wie in der DE-OS 2 302 563 angegeben - benutzt wird. Das System $H_2SO_4$-TBP-Kerosin neigt dazu, sich in 2 Phasen aufzutrennen (vgl. E.HESFORD und H.A.C. McKAY, J.Inorg.Nucl.Chem. 1960, Vol 13, Seite 164). Bedingungen, welche die Homogenität des Extraktionsmittels gefährden, sind jedoch für den technischen Einsatz einer flüssig-flüssig-Extraktion besonders problematisch.

Im Fall der DE-OS 2 610 434 wird anstelle von $H_2SO_4$ HCl als Fremdsäure zugesetzt. In Gegenwart von Eisenionen bildet nun HCl mit TBP einen Komplex nach folgender Gleichung:

$$FeCl_3 + HCl + 2\ TBP \longrightarrow HFeCl_4 \cdot 2\ TBP\text{-Komplex},$$

sodaß also Anteile der Fremdsäure mit den anderen zu extrahierenden Säuren in die organische Phase und aus dieser bei der Reextraktion in das Regenerat gelangen. Das Verfahren gemäß der DE-OS 2 610 434 versucht zwar diesen negativen Effekt zu mildern, indem es vorher den Großteil der Eisenionen extrahiert. Da aber im technischen Betrieb mit wirtschaftlich vertretbarem Aufwand keine absolut eisenionenfreie Behandlungsflüssigkeit mit Hilfe der in der DE-OS 2 610 434 angegebenen flüssig-flüssig-Extraktion hergestellt werden kann, kommt es durch den Fremdsäurezusatz unweigerlich zu einer Einschleppung der Salzsäure in das Extraktionsmittel und in das daraus eluierte Regenerat.

Überdies bildet HCl auch in Abwesenheit von Eisenionen mit TBP einen Komplex und wird so in die re-

0058148

generierte Säure eingeschleppt.

Es wurde nun gefunden, daß sich bei der Aufbereitung verbrauchter Eisenionen enthaltender Behandlungsflüssigkeiten oder Laugungsflüssigkeiten für metallische Werkstoffe oder metallhältige Erze, insbesondere Beizsäuren, welche freie und/oder gebundene HF und/oder $HNO_3$ enthalten, durch flüssig-flüssig-Extraktion Nachteile der geschilderten Art vermeiden und in nur zwei Verfahrensstufen überraschend gute Extraktionseffekte erzielen lassen, wenn ein Zusatz von Fremdsäure - also einer Säure, die weder gebunden noch frei in der ursprünglichen Behandlungsflüssigkeit liegt - in jeder der Verfahrensstufen unterlassen wird.

Das erfindungsgemäße Verfahren ist daher dadurch gekennzeichnet, daß die Freisetzung der an die Eisenionen gebundenen, anorganischen Säuren durch einen in Wasser unlöslichen, flüssigen Kationentauscher erfolgt und die solcherart freigestellten Säuren mittels eines organischen Adduktbildners aus der wässrigen Phase entfernt werden. Dieser Adduktbildner wird anschließend mit Wasser oder verdünnte Säuren, z.B. Beizspülwässern, regeneriert.

Als flüssige Kationentäuscher bezeichnet man bei Raumtemperatur flüssige Verbindungen, welche ein oder mehrere bewegliche Wasserstoffionen besitzen, die unter bestimmten Bedingungen gegen andere Kationen ausgetauscht werden können. Die in der ersten Stufe des erfindungsgemäßen Verfahrens bevorzugt eingesetzten, flüssigen Kationentauscher sind saure Phosphorsäureester, wie z.B. Diäthylhexylphosphat ($D_2EHPA$) oder Dibutylphosphat ($H_2DBP$). Die beim

Ionenaustausch gebildeten Eisensalze dieser Verbindungen sind ebenfalls in Wasser unlöslich, wodurch gleichzeitig mit dem Ionenaustausch auch eine Entfernung der Eisenionen aus der wässrigen Phase erfolgt.

Als organischer Adduktbildner (=Säureextraktionsmittel) in der zweiten Stufe wird vorzugsweise eine Lösung eines Phosphorsäureesters, wie Tributylphosphat (TBP), Dibutylbenzylphosphat (DBBP), Trioctylphosphat (TOP) bzw. Trioctylphosphinoxyd (TOPO) angewendet.

Bei diesem Verfahren werden also aus den an die Eisenionen gebundenen Säureresten mit Hilfe des flüssigen Kationentauschers, welcher die Eisenionen bindet und gleichzeitig aus der wässrigen Phase extrahiert, die freien Säuren rückgebildet und diese in einer zweiten Stufe mit Hilfe eines Adduktbildners extrahiert, wobei eine Lösung der Nichteisen-Metallsalze zurückbleibt. Die Regeneration des mit Eisenionen beladenen, flüssigen Kationentauschers der ersten Stufe erfolgt vorteilhaft mit 10 bis 50%iger, vorzugsweise 20 bis 30%iger Schwefelsäure. Wenn die Behandlungsflüssigkeit Fluoride enthalten hat, enthält der beladene, flüssige Kationentauscher neben Eisen auch noch Eisenfluorokomplexe - z.B. $HFeF_4$ - welche bei der Regeneration mit Schwefelsäure gespalten werden. Das wässrige Regenerat enthält in diesem Fall neben $Fe_2(SO_4)_3$ auch noch freie HF, welche vorteilhaft mit dem gleichen Adduktbildner wie in Stufe 2 verwendet - also z.B. einer Tributylphosphatlösung - extrahiert und daraus mit wässrigen Lösungen wiedergewonnen wird. Bei diesem Verfahren wird daher die Behandlungsflüssigkeit bzw. die zu

regenerierende Flüssigkeit in mehrere Produktströme mit verschiedenen Metall- und Säuregehalten aufgetrennt, die dann einer individuellen Verwertung sowohl der Säure als auch der Metallanteile zugeführt werden können.

Bei der Regeneration des flüssigen Kationentauschers (=Eisenextraktionsmittel) der ersten Verfahrensstufe entsteht die HF-hältige $Fe_2(SO_4)_3$-Lösung, welche wie vorhin geschildert, in eine wässrige $Fe_2(SO_4)_3$-Lösung und eine wässrige HF-Lösung aufgetrennt wird.

In der zweiten Verfahrensstufe fällt eine wässrige Nichteisenmetall-Salzlösung (z.B. Cr, Ni-Salze) an, und bei der Regeneration des Adduktbildners schließlich eine wässrige Lösung von $HNO_3$ und HF.

Die Regeneration des flüssigen Kationentauschers (z.B. Lösungen von $D_2EHPA$ oder $H_2DBP$) wird beim erfindungsgemäßen Verfahren, dem Stand der Technik entsprechend, wie beschrieben, mit Säuren, vorzugsweise $H_2SO_4$, vorgenommen. Die Gefahr, daß störende Mengen von Fremdsäuren durch diesen Regenerationsprozeß in die zu reinigende, wässrige Phase eingeschleppt werden, besteht nicht, da z.B. $H_2SO_4$ nur eine vernachlässigbare Löslichkeit in diesem Eisenextraktionsmittel hat. Im Säureextraktionsmittels (z.B. Lösungen des Adduktbildners TBP) dagegen sind Fremdsäuren, wie $H_2SO_4$ oder HCl ausgezeichnet bis gut löslich. Hier zeigt sich besonders deutlich der technologische Vorteil der Maßnahme, daß beim erfindungsgemäßen Verfahren keine Fremdsäure der zu reinigenden, wässrigen Phase zugesetzt wird, da das erfindungsgemäße Verfahren sich nämlich so gestalten läßt (z.B. Schaltung nach

Fig. 1), daß Fremdsäure nie mit dem Säureextraktionsmittel in Berührung kommt. Dies ist bei den zum Stand der Technik zählenden, vergleichbaren Verfahren, welche der aufzubereitenden, wässrigen Phase Fremdsäure zusetzen, absolut unmöglich, sodaß dort die Fremdsäureeinschleppung in die aufzubereitenden, wässrige Lösung unvermeidbar ist. Die Fremdsäurewässrige Lösung kommt nämlich z.B. beim Verfahren gemäß der DE-OS 2 302 563 bereits in der ersten Verfahrensstufe, bei Verfahren gemäß der DE-OS 2 610 434 in der auf die erste folgende Verfahrensstufen mit dem Säureextraktionsmittel zwangsläufig in Kontakt, wodurch die Fremdsäuren zuerst in das Säureextraktionsmittel, und bei dessen Regeneration in die wässrige Lösung der wiedergewonnenen Säuren (z.B. regenerierte Beizsäure) gelangen.

Weiters wurde nun gefunden, daß es von besonderem Vorteil ist und der Wirkungsgrad der Säurefreisetzung erheblich gesteigert werden kann, wenn die erste Verfahrensstufe in mehrere Einzelschritte aufgeteilt wird, welche hintereinander geschaltet werden und alternierend einmal mit dem flüssigen Kationentauscher (z.B. Lösungen von $D_2$EHPA oder $H_2$DBP) und einmal mit dem Säureextraktionsmittel (Lösungen der Adduktbildner TBP, DBBP, TOP und TOPO) betrieben werden. Zu diesem Zweck werden zwischen je zwei Fe-Extraktionsstufen eine oder mehrere Säureextraktionsstufen eingefügt. Dabei wird die nach dem Proton/Eisen-Austausch freigesetzte Säure in der anschließenden Zwischenextraktion sofort aus der wässrigen Lösung entfernt, worauf sich der neuerliche Proton/Eisen-Austausch in der nächsten Extraktionsstufe wesentlich wirksamer gestaltet und einen entscheidend niedrigeren Rest-Eisengehalt erzielen läßt.

Nach dem bisher geschilderten, erfindungsgemäßen Verfahren ist es möglich, verbrauchte Behandlungsflüssigkeiten oder Laugungsflüssigkeiten für metallische Werkstoffe oder Erze, insbesondere Beizsäuren, welche freie und/oder gebundene HF und/oder $HNO_3$ enthalten, so zu regenerieren, daß eine weitgehend oder völlig metallfreie Säurelösung wiedergewonnen wird und zum erneuten Einsatz zur Verfügung steht.

Eine besonders wirksame Säurefreisetzung wird erzielt, wenn vor die erste Eisenextraktionsstufe eine Säureextraktionsstufe geschaltet wird, in welcher die freien, anorganischen Säuren aus der aufzubereitenden Lösung entfernt werden, bevor diese der Eisenextraktion zugeführt wird.

Das erfindungsgemäße Verfahren kann in allen für die flüssig-flüssig-Extraktion geeigneten Apparaten und Einrichtungen, wie z.B. Mischer-Scheider-Anlagen oder Extraktionskolonnen, durchgeführt werden.

Als Verdünnungsmittel für die Extraktionsmittel können alle in der Technik üblichen derartigen Verdünnungsmittel, wie z.B. Kerosin, Halogenkohlenwasserstoffe und Halogenkohlenstoffe, eingesetzt werden. Besondere Vorteile - insbesondere wegen seiner Unbrennbarkeit und geringen Wasserlöslichkeit - bietet die Verwendung von Hexachlorbutadien als Verdünnungsmittel bzw. Lösungsmittel für das eigentliche Extraktionsmittel.

## Ausführungsbeispiele

### Beispiel 1

Die Extraktionsversuche werden in aus Polypropylen gefertigten Mischer-Abscheider-Kaskaden A1, A2, B1, B2 und C1, C2 durchgeführt. Jede der Mischer-Scheider-Kaskaden besteht aus mehreren hintereinandergeschalteten Mischer-Abscheider-Zellen üblicher Bauart. Die Kaskade A1, A2, B2 und C1 besteht aus 5, die Kaskade C2 aus 4 und die Kaskade B1 aus 8 Mischer-Abscheider-Zellen.

Der Mischerraum jeder Zelle hat ein nutzbares Volumen von 1000 ml und einen Querschnitt von 100 x 100 mm, der Abscheider hat ein hutzbares Volumen von 2000 ml und eihen Querschnitt 200 x 100 mm. In jedem Mischerraum befindet sich ein Turbinenrührer mit einem Turbinendurchmesser von 60 mm, welcher mit 1000 U/min betrieben wird. In den einzelnen Extraktionsstufen werden die zu extrahierende wässrige Phase zu der extrahierenden organischen Phase in der üblichen Weise im Gegenstrom geführt.

Die organische Phase der Extraktionskaskaden A1 und A2 besteht aus einer Mischung von 35 Vol% Diäthylhexylphosphat ($D_2EHPA$) und 65 Vol% Hexachlorbutadien (Eisenextraktionsmittel). Die organische Phase der Extraktionskaskaden B1, B2, C1 und C2 bildet eine Mischung aus 65 Vol% Tributylphosphat (TBP) und 35 Vol% Hexachlorbutadien (Säureextraktionsmittel).

Eine schematische Übersicht über die Schaltung der einzelnen Kaskaden ist in Abb. 2 wiedergegeben. Abb. 1 zeigt die Schaltung, wenn auf die Kaskade C (HF-Extraktion aus dem Raffinat aus A2) verzichtet

wird.

Das Verhältnis der organischen zur wässrigen Phase beträgt in A1 und C2 1,5 : 1, in den Kaskaden A2 und C1 2 : 1, und in den Kaskaden B1 und B2 3 : 1.

In die Kaskade A1 wird nun verbrauchte Mischsäure aus einer Edelstahlbeize mit einem Gehalt von

| | | |
|---|---|---|
| 40,0 g/l | Fe | |
| 9,7 " | Cr | |
| 4,3 " | Ni | |
| 150,0 " | $NO_3$ | (davon 140,9 g/l frei) |
| 80,0 " | F | (davon 29,6 " frei) |

eingeleitet und mit dem flüssigen Kationentauscher behandelt. Kaskade A1 verläßt eine wässrige Lösung mit einem Gehalt von

| | |
|---|---|
| 4,0 g/l | Fe |
| 9,7 " | Cr |
| 4,3 " | Ni |
| 150,0 " | $NO_3$ |
| 62,0 " | F, |

welche der Kaskade B1 zugeführt wird, wo die Säureextraktion mit dem Addüktbildner stattfindet. Die die B1 verlassende, wässrige Lösung hat folgende Zusammensetzung:

| | |
|---|---|
| 4,0 g/l | Fe |
| 9,7 " | Cr |
| 4,3 " | Ni |
| 15,0 " | $NO_3$ |
| 21,7 " | F. |

Sie ist also an Cr und Ni angereichert und kann zur Wiedergewinnung dieser Wertmetalle herangezogen werden.

Die organische Phase aus A1 wird in A2 mit 30%iger Schwefelsäure regeneriert. Anschließend wird die regenerierte, organische Phase wieder zu A1 zurückgeleitet und der Extraktionsmittelkreislauf dadurch geschlossen. Die bei A2 anfallende, wässrige Phase enthält:

| | | |
|---|---|---|
| 48,0 | g/l | Fe |
| 24,0 | " | F |
| 358,6 | " | $SO_4$ |

und wird der Kaskade C1 zugeführt, welche sie als saure Eisensulfatlösung dann mit folgendem Gehalt:

| | | |
|---|---|---|
| 48,0 | g/l | Fe |
| 8,5 | " | F |
| 358,6 | " | $SO_4$ |

verläßt.

Das aus C1 stammende, beladene Säureextraktionsmittel wird in C2 mit aus der Beize stammendem Spülwasser der Zusammensetzung

| | | |
|---|---|---|
| 4,0 | g/l | Fe |
| 1,0 | " | Cr |
| 0,4 | " | Ni |
| 15,0 | " | $NO_3$ |
| 8,0 | " | F |

regeneriert. Der daraus resultierende wässrige Extrakt wird dann B2 zugeleitet, wo ebenfalls das Säureextraktionsmittel regeneriert wird und sich die wässrige Lösung soweit aufkonzentriert, daß sie bei Austritt aus B2 als regenerierte Mischsäure anfällt und folgende Zusammensetzung aufweist:

| | | | |
|---|---|---|---|
| 4,0 | g/l | Fe | |
| 1,0 | " | Cr | |
| 0,4 | " | Ni | |
| 150,0 | " | $NO_3$ | (davon frei: 149,2 g/l) |
| 60,0 | " | F | (davon frei: 54,8 g/l) |

Der Gesamtrückgewinnungsgrad an $NO_3$ beträgt 100 %, an F 75 %.

Beispiel 2

Es wird wie im Beispiel 1 beschrieben gearbeitet, jedoch werden in der Kaskade A1 nur 3 Mischer-Scheider-Zellen verwendet, das Verhältnis von organischer Phase ($D_2EHP$ in Hexachlorbutadien) zu wässriger Phase wird im Verhältnis 1 : 1 gewählt und als aufzubereitende Lösung eine wässrige Lösung mit einem Gehalt von

41,3 g/l Fe
50,0 " F

eingesetzt. Die A1 verlassende wässrige Phase hat eine Zusammensetzung von

10,0 g/l Fe
37,0 " F.

Die A1 verlassende organische Phase weist einen Gehalt von

30,7 g/l Fe und
13,0 " F auf.

Der Extraktionsgrad bei F beträgt also 26,0 %, bei Fe 75,8 %. Die weitere Aufarbeitung kann wie im Beispiel 1 beschrieben vorgenommen werden. Die Differenz von 0,6 g/l Eisen wird als eine Analysenungenauigkeit begründet.

Beispiel 3

Es wird wie in Beispiel 2 bzw. 1 angegeben gearbeitet, jedoch die 1. Kaskade so gestaltet, daß zuerst zwei Säureextraktionszellen (analog B1) geschaltet werden, dann eine Eisenextraktionszelle (analog A1), darauf wieder 2 Säureextraktionszellen, darauf eine Eisenextraktionszelle, darauf wieder 2 Säureextraktionszellen und abschließend eine Eisenextraktionszelle. Die ganze Kaskade oder Batterie besteht also aus 9 Einzel-Mischer-Scheider-Zellen, wobei die Eisenextraktionszellen mit einer Lösung von $D_2EHP$ in Hexachlorbutadien (50 : 50 Vol%) im Phasenverhältnis (organische : wässrige Phase =) 1 : 1 bei einer Verweildauer von 25 min betrieben werden, und die Säureextraktionszellen mit einer Lösung von TBP in Hexachlorbutadien (50 : 50 Vol%) im Phasenverhältnis 1 : 1 bei einer Verweildauer von 10 min betrieben werden. Wird der ersten Mischer-Scheider-Zelle eine wässrige Lösung mit einem Gehalt von

153,5 g/l $NO_3$
65,0 " F
40,5 " Fe

zugeführt, so erhält man aus der letzten Zelle eine

wässrige Lösung mit einem Gehalt von:

43,5 g/l $NO_3$
19,0 " F
3,8 " Fe.

Der Eisengehalt wurde also auf weniger als 1/10 seines ursprünglichen Gehaltes reduziert.

Die aus den einzelnen Mischer-Scheider-Zellen austretenden Produktströme an wässriger Phase haben folgende Anteile an $NO_3$, F und Fe:

| Produktstrom aus Mischer-Scheider-Zelle Nr. | Extrahierter Stoff | $NO_3$ g/l | F g/l | Fe g/l |
|---|---|---|---|---|
| 1 | Säure | 115,6 | 61,0 | 43,4 |
| 2 | Säure | 90,9 | 57,0 | 44,7 |
| 3 | Eisen | 90,9 | 47,0 | 19,8 |
| 4 | Säure | 74,4 | 41,0 | 21,1 |
| 5 | Säure | 60,0 | 34,0 | 22,0 |
| 6 | Eisen | 60,0 | 31,0 | 9,2 |
| 7 | Säure | 51,1 | 24,0 | 9,5 |
| 8 | Säure | 43,5 | 19,0 | 9,6 |
| 9 | Eisen | 43,5 | 19,0 | 3,8 |

Die beladenen organischen Extraktionsmittel jeder einzelnen Zelle werden unabhängig voneinader in der üblichen Weise regeneriert, sodaß in jeder Mischer-Scheider-Zelle frisches Extraktionsmittel zum Einsatz gelangt.

Für die Eisenabreicherung von 43,4 auf 3,8 g/l sind also nur drei Eisenextraktionsstufen erforderlich. Wird die gebildete freie Säure nicht durch Zwischenextraktion entfernt, dann sind unter vergleichbaren Bedingungen etwa 5 Eisenextraktionsstufen nötig.

Die weitere Aufarbeitung kann wie in Beispiel 1 beschrieben vorgenommen werden.

Beispiel 4

Es wird analog wie in Beispiel 1 angegeben gearbeitet, jedoch die Extraktionskaskade B1 nur aus 3 Mischer-Scheider-Zellen zusammengestellt und mit einer wässrigen Lösung folgender Zusammensetzung

| | | |
|---|---|---|
| 8,5 g/l | Fe | |
| 3,5 " | Cr | |
| 6,3 " | Ni | |
| 138,8 " | $NO_3$ | (davon 125,5 g/l frei) |
| 29,2 " | F | (davon 16,7 " frei) |

beschickt. Das Phasenverhältnis von organischer Phase (65 Vol% Tributylphosphat : 35 Vol% Hexachlorbutadien) zur wässrigen Phase wird 3 : 1 gewählt.

Der $NO_3$- und F-Gehalt der aus der letzten abfließenden wässrigen Phase beträgt:

37,8 g/l $NO_3$
10,6 " F.

Die aus der ersten Zelle abfließende organische Phase hat einen Gehalt von

33,6 g/l $NO_3$ und
6,2 " F.

Da mit einem Phasenverhältnis von 3 : 1 gearbeitet

wurde, ergibt sich folgende Extraktionsbilanz:

| | |
|---|---|
| Abgegeben von 1 l wässriger Phase: | 101,0 g $NO_3$ |
| | 18,6 g F |
| Aufgenommen von 3 l organ.Phase: | 100,8 g $NO_3$ |
| | 18,6 g F |

Man ersieht daraus, daß 72,7 % des gesamten $NO_3$ oder 80,5 % der freien $HNO_3$, bzw. 63,7 % des gesamten F oder 111,4 % (!) der freien HF extrahiert wurden.

Der extrahierte Anteil von 111,4 % der freien HF beweist, daß auch ohne Fremdsäurezusatz überraschenderweise mehr freie HF extrahiert wird, als in der ursprünglichen Lösung vorhanden ist.

Dies ist dadurch möglich, daß im Verlauf der Säureextraktion durch Gleichgewichtsverschiebung ein Teil der ursprünglich komplex an die Metallionen gebundenen Fluorionen als HF in Freiheit gesetzt und dadurch wiedergewinnbar wird, und die Metalle in der Folge als Lösung ihrer wesentlich billigeren Nitrate vorliegen. Der Metallfluoridkomplex wird also ohne Fremdsäurezusatz gespalten.

Dadurch zeigt sich in eindrucksvoller Weise, daß eine Komplexspaltung dieser an sich als äußerst schwer spaltbar geltenden Metallfluorkomplexe auch ohne Fremdsäurezusatz möglich ist.

0058148

Patentansprüche

1. Verfahren zum Aufbereiten verbrauchter Eisenionen enthaltender Behandlungsflüssigkeiten oder Laugungsflüssigkeiten für metallhältige Werkstoffe oder Erze durch flüssig-flüssig-Extraktion, dadurch gekennzeichnet, daß die an Eisenionen gebundenen, anorganischen Säuren in einer ersten Verfahrensstufe mittels eines flüssigen Kationentauschers unter gleichzeitiger extraktiver Entfernung der Eisenionen in Freiheit gesetzt, anschließend in einer zweiten Verfahrensstufe selbst mittels mit ihnen Addukte bildenden, organischen Extraktionsmitteln aus der wässrigen Phase entfernt und durch Zersetzen dieser Addukte mit Wasser oder verdünnten Säuren wiedergewonnen werden.

2. Verfahren nach Anspruch 1, dadurch gekennzeichnet, daß die Freisetzung der anorganischen Säuren durch den flüssigen Kationentauscher in der ersten Verfahrensstufe in mehreren, hintereinander geschalteten Einzelschritten erfolgt, wobei nach jedem einzelnen Ionenaustauschschritt die dabei freigesetzten Säuren mittels des mit ihnen Addukte bildenden Extraktionsmittels sofort entfernt werden.

3. Verfahren nach Anspruch 1 oder 2, dadurch gekennzeichnet, daß vor der Freisetzung der gebundenen Säuren durch den flüssigen Kationentauscher die in der aufzubereitenden Lösung noch vorhandenen, freien anorganischen Säuren durch einen Adduktbildungs-Extraktionsschritt entfernt werden.

FIG. 1

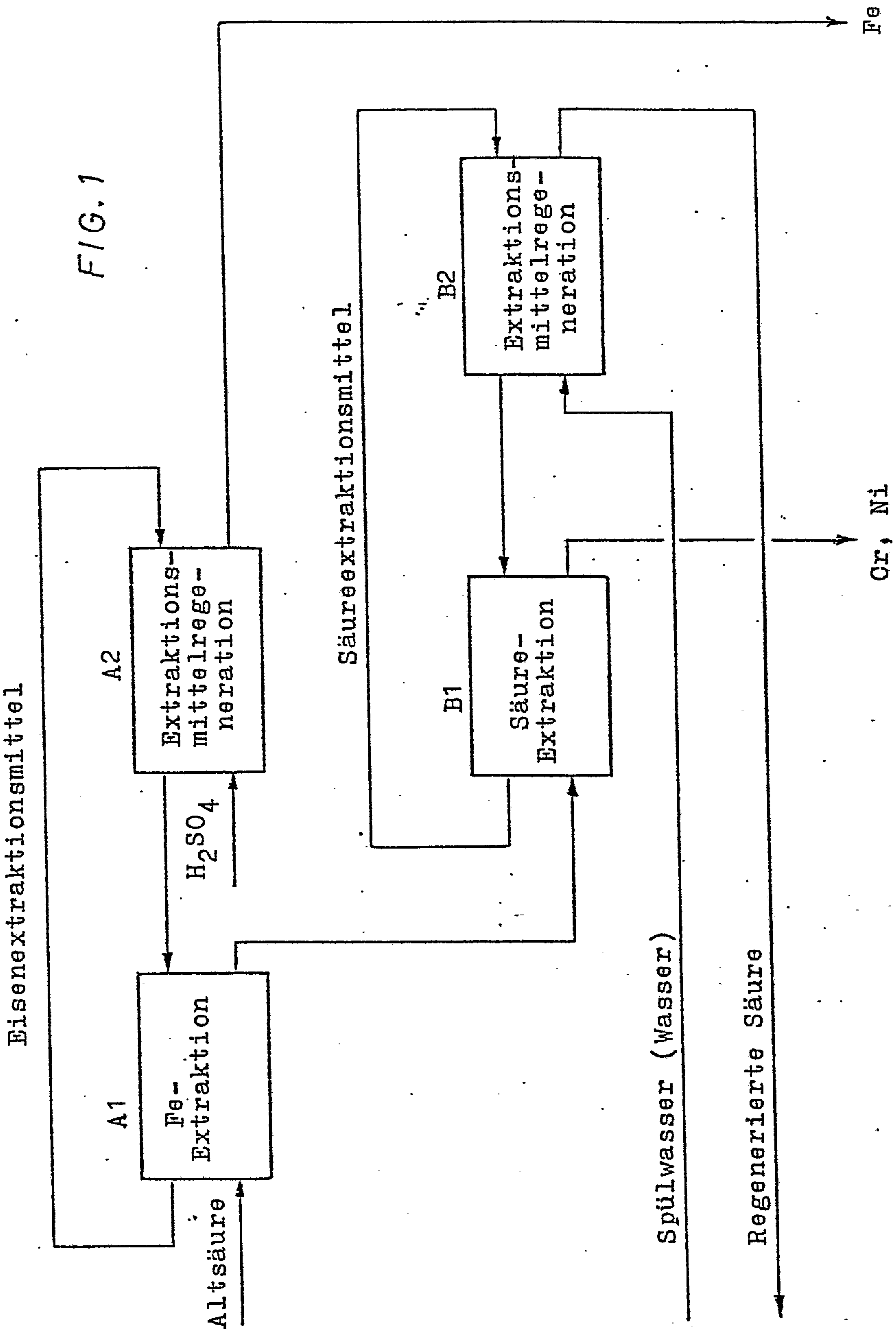
Fe
Extraktions-
mitteelrege-
neration
B2
Säureextraktionsmittel
Cr, Ni
Säure-
Extraktion
B1
Eisenextraktionsmittel
A2
Extraktions-
mittelrege-
neration
$H_2SO_4$
A1
Fe-
Extraktion
Altsäure
Spülwasser (Wasser)
Regenerierte Säure

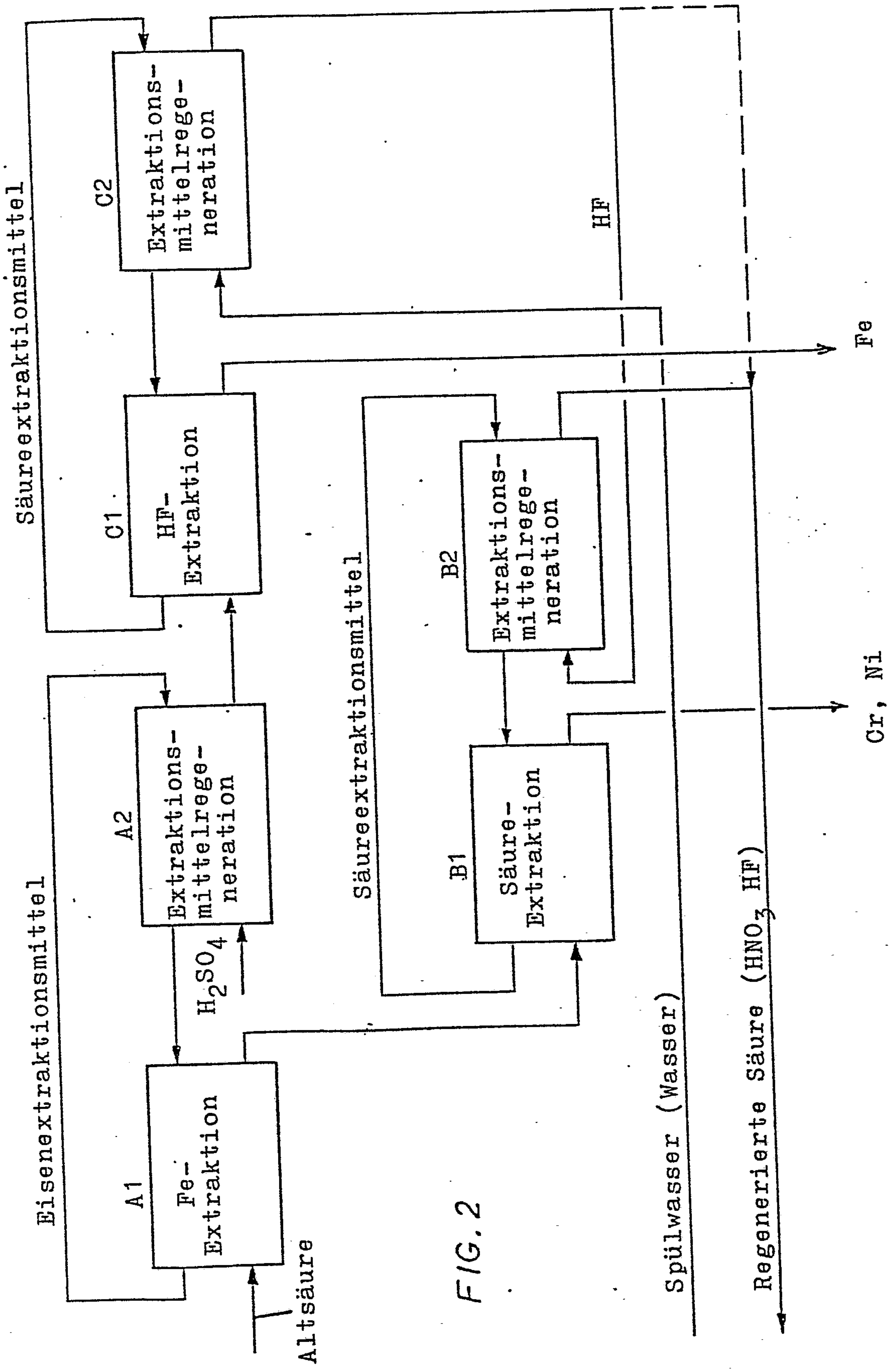

Altsäure
A1
Fe-Extraktion
Eisenextraktionsmittel
A2
Extraktions-mittelrege-neration
$H_2SO_4$
B1
Säure-Extraktion
Säureextraktionsmittel
B2
Extraktions-mittelrege-neration
C1
HF-Extraktion
Säureextraktionsmittel
C2
Extraktions-mittelrege-neration
HF
Fe
Cr, Ni
Spülwasser (Wasser)
Regenerierte Säure ($HNO_3$ HF)


FIG. 2